# EUROPEAN PATENT APPLICATION

(11) **EP 0 866 347 A1**
(43) Date of publication of application: **23.09.1998**
(21) Application number: 98104848.1
(22) Date of filing: 17.03.1998
(51) Int. Cl.: G02B 6/00, G02B 6/38

(54) **A ferrule for an optical fiber connector and method for making same**

(30) Priority: 17.03.1997 JP 84427/97
(71) Applicant: MOLEX INCORPORATED, Lisle Illinois 60532 (US)
(72) Inventor: Ikebe,Katsuhiko, Machida-shi, Tokyo (JP); Kawasaki,Yasunari, Zama-shi, Kanagawa (JP)
(74) Representative: Blumbach, Kramer & Partner GbR

(57) **Abstract**

Disclosed is an improved ferrule for use in an optical fiber connector. It is made of pulverized ceramic material, which includes pulverized zirconia (ZrO₂) as a base and at least 0.01 percent by weight of pulverized alumina (Al₂O₃) to prevent the radius of curvature of the physical contact surface of the ferrule from varying with time.

## Description

### Background of the Invention

The present invention relates to a composition of a ferrule for connecting two optical fibers in opposed relation and a method of making the same.

### Description of the Prior Art

Usually an optical fiber connector for use in connecting opposed optical fibers comprises two ferrules to be attached to the ends of optical fibers, which are to be opposed and connected, two housings each allotted to each of the ferrules for holding the ferrule and a guide sleeve for allowing the opposed ferrules to move toward each other therein until they abut against each other. The ferrule is a fine hollow cylinder of precision size, such as 2.5 mm in outer diameter, having a through hole made along its longitudinal center axis, and is usually made of zirconia (ZrO₂).

The ferrule is made by: preparing a mixture of pulverized zirconia (ZrO₂) and a given amount of stabilizer; molding the mixture into a predetermine form; sintering the so shaped mixture; and finally subjecting the sintered body to precision grinding. In use, an exposed length of optical fiber of the stripped end of an optical fiber cable is inserted into the through hole in one end of the a ferrule. The end of the ferrule to abut against the end of the counter ferrule in a guide sleeve is ground so that the end of the optical fiber-and-ferrule body may be shaped into a semi-spherical form. This permits the semi-spherical end of the optical fiber-and-ferrule composite body to make a physical contact with respect to the semi-spherical end of the counter optical fiber-and-sleeve composite body without a gap between the opposed optical fibers which could cause optical loss at the juncture therebetween. It is, therefore, necessary that the center of the optical fiber is exactly in alignment with the center (zenith) of the semi-spherical surface and that the semi-spherical physical contact surface remains unchanged for an elongated period of use.

As for a conventional ferrule of zirconia (ZrO₂) the curvature radius of the physical contact surface thereof is liable to change with time: usually the physical contact surface is liable to be flattened. Such a significant deformation will cause a gap between the opposed optical fibers. Otherwise, misalignment will be caused between the opposed optical fibers. In any event, such adverse effects will increase the optical loss at the juncture, thereby lowering the connection reliability.

### Summary of the Invention

One object of the present invention is to provide a ferrule for an optical fiber connector which has a physical contact surface that is almost free of deformation after an extended period of use.

Another object of the present invention is to provide a method of making such a ferrule which has a physical contact surface that is almost free of deformation.

To attain these objects a ferrule for an optical fiber connector is made of a mixture of pulverized ceramic material including pulverized zirconia (ZrO₂) as its base and a predetermined small amount of pulverized alumina (Al₂O₃) to prevent the physical contact surface of the ferrule from varying its radius of curvature with time.

Specifically, a ferrule for an optical fiber connector made by molding and sintering pulverized ceramic material is improved according to the present invention in that said pulverized ceramic material includes pulverized zirconia (ZrO₂) as the base, a given amount of stabilizer and a predetermined small amount of pulverized alumina (Al₂O₃) to prevent the physical contact surface of the ferrule from varying its radius of curvature with time.

A method of making a ferrule for an optical fiber connector by molding and sintering pulverized ceramic material with a stabilizer mixed therewith is improved according to the present invention in that it comprises the steps of: preparing a mixture of pulverized zirconia (ZrO₂) as the base, a given amount of stabilizer and a predetermined small amount of pulverized alumina (Al₂O₃) for preventing the physical contact surface of the ferrule from varying its radius of curvature with time; molding the mixture into a predetermined form; and sintering the so shaped mixture.

Preferably, the amount of the pulverized alumina ranges from 0.2 to 0.3 percent by weight. The addition of pulverized alumina below 0.2 percent by weight is significantly effective in preventing the physical contact surface of the ferrule from varying its radius of curvature with time. Whereas, the addition of pulverized alumina over 0.3 percent by weight will cause the hardness of the sintered ceramic body to rise to the extent of making it difficult to grind the sintered object into a semi-spherical shape. The addition of pulverized alumina of 0.25 percent by weight is most preferable.

With a view to allowing sintered zirconium objects to retain its isometric system, thereby preventing abnormal expansion or contraction, a stabilizer such as Y₂O₃ (yttria), CeO₂, CaO, MgO or other oxides are added in pulverized form. The amount of such stabilizer to be added ranges from 4 to 6 percent by weight.

Pulverized ceramic material can be given a predetermined shape, and the so shaped pulverized ceramic objects can be sintered in the same way as conventional ferrules using pulverized zirconia can be formed. The pulverized ceramic material can be given a predetermined shape for example, by injection molding. The sintered object can be subjected to conventional precision grinding.

A ferrule for an optical fiber connector according to the present invention has a physical contact surface free of significant deformation and discoloration. Also advantageously, the pulverized ceramic mixture of which such a ferrule can be made according to the present invention can be easily given a predetermined shape, and the so shaped body can be sintered without difficulty. Grinding can be effected easily because of no significant increase in hardness due to addition of alumina.

### Brief Description of the Drawings:

Other objects and advantages of the present invention will be understood from the following description of a ferrule of an optical fiber connector according to the preferred embodiment of the present invention, which is shown in the accompanying drawings:
Figure 1 is a side view, partly in section, of an optical fiber connector with ferrules that can be made according to the present invention;
Figure 2 illustrates the physical contact surfaces of the opposed optical fiber-and ferrule composite bodies, abutting to each other;
Figure 3 shows how each of the physical contact surfaces in a selected set of opposed ferrules according to the present invention is deformed with time;
Figure 4 shows how each of the physical contact surfaces in a selected set of opposed conventional ferrules is deformed with time; and
Figure 5 shows how the radius of curvature of conventional ferrules and ferrules according to the present invention vary with time under given environments.

### Description of the Preferred Embodiment

Ferrules of an optical fiber connector according to the present invention are described below in comparison with selected conventional ferrules.

Specifically, three sets of ferrules each including a pair of ferrules according to the present invention and another three sets of ferrules each including a pair of conventional ferrules were prepared, and these sets of ferrules were evaluated by determining how their physical contact surfaces varied with time in high temperature-and-high humidity environments. The ferrules according to the present invention were composed of ingredients given in Table 1. Specifically, pulverized ceramic material including the ingredients given in Table 1 was molded into a given shape, and the so shaped bodies were sintered. An optical fiber was inserted in each of the sintered products, and finally each optical fiber-and-ferrule composite body was subjected to precision grinding, thereby forming a physical contact surface at a mating end. Likewise, conventional optical fiber-and-ferrule composite bodies each having a physical contact surface formed on a mating end were provided by molding, sintering and grinding pulverized ceramic material including the ingredients given in Table 2.

**Table 1**

| Ingredients | Weight (% by weight) |
|---|---|
| ZrO₂ | 94.4693 |
| Y₂O₃ | 5.27 |
| Al₂O₃ | 0.2522 |

| Inevitable impurities | |
|---|---|
| SiO₂ | 0.0017 |
| Fe₂O₃ | 0.0008 |
| TiO₂ | 0.0012 |
| Na₂O | 0.0004 |
| Cl | 0.0043 |

**Table 2**

| Ingredients | Weight (% by weight) |
|---|---|
| ZrO₂ | 94.751 |
| Y₂O₃ | 5.24 |

| Inevitable impurities | |
|---|---|
| Al₂O₃ | 0.0016 |
| SiO₂ | 0.0015 |
| Fe₂O₃ | 0.0007 |
| TiO₂ | 0.0016 |
| Na₂O | trace amount, but undeterminable |
| Cl | 0.0036 |

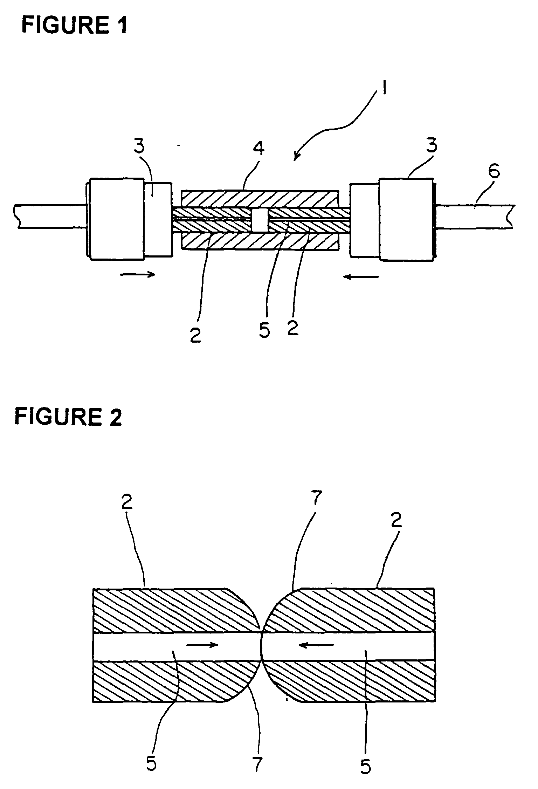

The sets of ferrules of the present invention and the sets of conventional ferrules were evaluated in a typical optical fiber connector. Referring to Figure 1, an optical fiber connector 1 comprises two opposed ferrules 2, two housings 3 for supporting the ferrules 2, a sleeve 4 for holding the ferrules 2, and optical fibers 5, which extend from associated optical fiber cables 6. As seen from Figure 2, the end of each optical fiber-and-ferrule composite body was subjected to precision grinding to provide a semi-spherical, physical contact surface 7, and the so ground optical fiber-and-ferrule composite bodies were inserted in the adapter sleeve 4 until their semi-spherical, physical contact surfaces 7 abutted to each other in the adapter sleeve 4 by applying a predetermined pressure thereto (about 1kg), thus making a required physical contact therebetween.

The resultant assemblies such as shown in Figure 1 were exposed to high temperature and high humidity environments, which were produced in a constant temperature and humidity vessel (made by Tabai Espac Co., Ltd. using PLIG). The physical contact surface 7 of each optical fiber-and-ferrule composite body was observed to determine the radius of curvature, the amount of withdrawal of the optical fiber in the ferrule and the amount of axial deviation of the optical fiber in the ferrule. Such observations were made in the contact fashion with the aid of the ACCIS by NTT Advanced Technology.

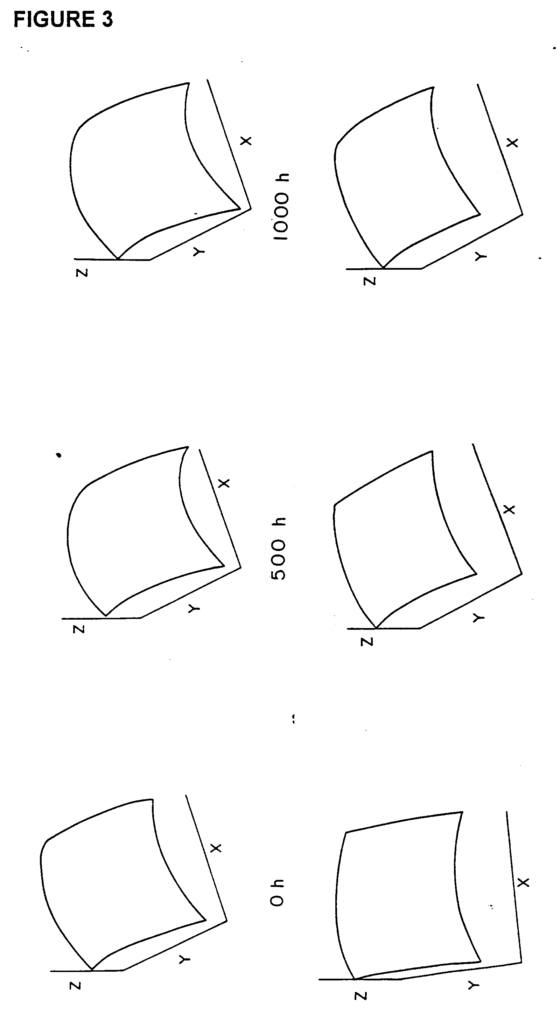

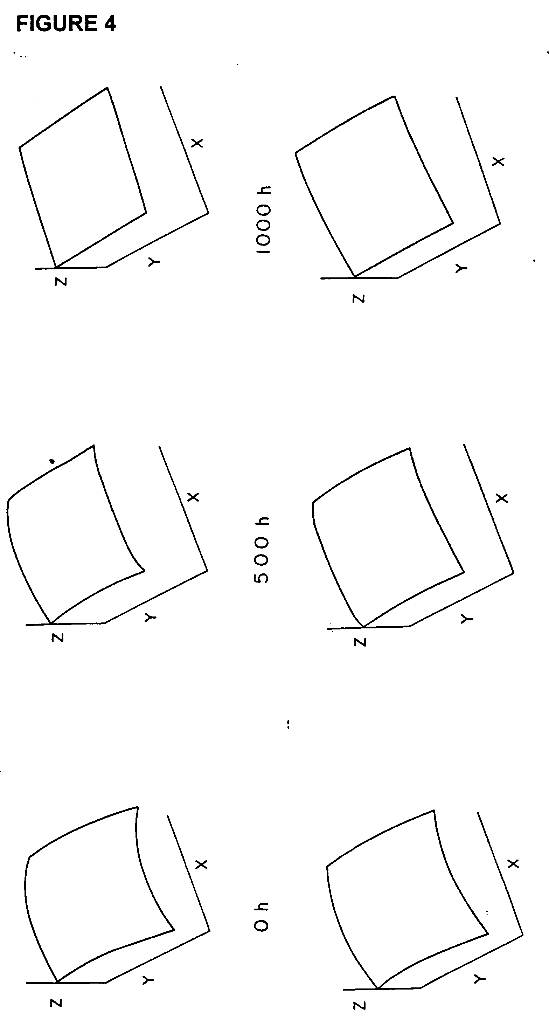

Figure 3 shows how each of the physical contact surfaces in the opposed ferrules according to the present invention is deformed with time. The ferrules were made of pulverized ceramic material plus a predetermined small amount of added pulverized alumina (Al₂O₃) to prevent the physical contact surface of the ferrule from varying the radius of curvature with time. Figure 4 shows how each of the physical contact surfaces in the opposed conventional ferrules deformed with time. In each of these diagrams in Figures 3 and 4, the physical contact surface of one ferrule is shown above after every lapse of 500 hours whereas the physical contact surface of the other ferrule is shown below after every lapse of 500 house. In the diagram in Figures 3 and 4, "X" and "Y" represents coordinate axes in the diametrical direction of the ferrule and "Z" represents a coordinate axis in the direction along the hole in the ferrule which receives the optical fiber. As seen from Figure 3, the physical contact surface of the ferrules according to the present invention are almost free of deformation. In contrast, the physical contact surfaces of the conventional ferrules were flattened increasingly with time.

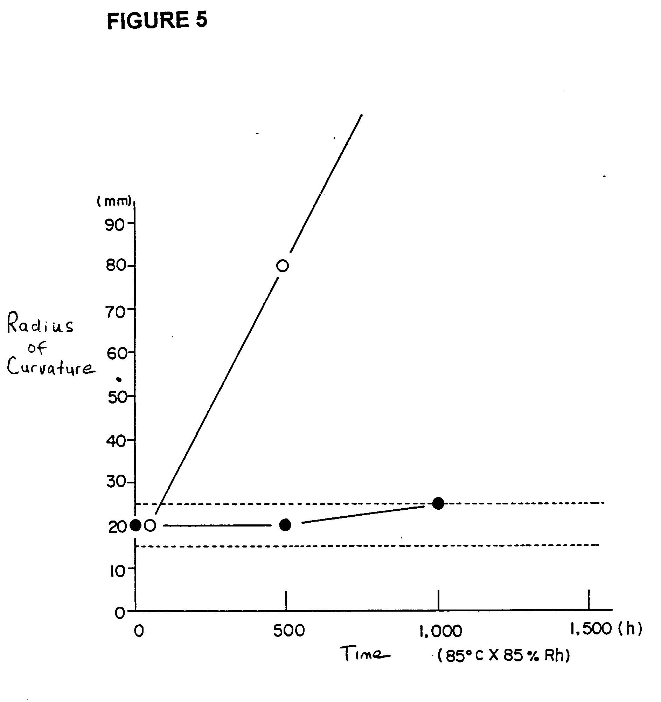

The average values of some selected parameters to show the degree of deformation were determined after every lapse of 500 hours as seen from Table 3 and Figure 5. These data show that the radius of curvature of the ferrules according to the present invention substantially resist varying with time, resulting in minimization of the axial deviation of the optical fiber in the ferrule. Figure 5 graphs the radius of curvature over time from the data in Table 3. The datum points represented by the open circles correspond to the conventional ferrules and the datum points represented by the filled circles correspond to the ferrules according to the present invention.

**Table 3**

| Ferrules According to the Present Invention | | | |
|---|---|---|---|
| | 0 hours | 500 hours | 1000 hours |
| Curvature radius (mm) | 19.8 | 22.6 | 25.0 |
| withdrawal of optical fibers (µm) | 0.01 | -0.04 | -0.04 |
| axial deviation (µm) | 26.0 | 27.8 | 32.0 |

| Conventional Ferrules | | | |
|---|---|---|---|
| | 0 hours | 500 hours | 1000 hours |
| Curvature radius (mm) | 18.9 | 78.7 | 175.4 |
| withdrawal of optical fibers (µm) | 0.01 | 0.01 | 0.04 |
| axial deviation (µm) | 28.5 | 73.7 | 247.3 |

As may be understood from the above, a ferrule of an optical fiber connector is made of sintered pulverized ceramic material including pulverized Zirconia (ZrO₂) as a base along with a predetermined small amount of pulverized alumina (Al₂O₃) according to the present invention. Such a ferrule has the effect of preventing the radius of curvature of the physical contact surface from varying with time, optical loss at the junction is reduced without any adverse accompanying adverse effects such as difficulties in molding, sintering, grinding and discoloration. Also advantageously, such a composition can be used to make ferrules for an optical fiber connector according to a conventional method without any extra steps.

## Claims

1. A ferrule (2) for an optical fiber (1) connector comprising ceramic material including zirconia (ZrO₂) and at least 0.01 percent by weight of pulverized alumina (Al₂O₃).

2. A ferrule (2) according to claim 1 wherein the amount of said alumina ranges from 0.2 to 0.3 percent by weight.

3. A ferrule (2) according to claim 1 wherein the amount of said alumina is 0.25 percent by weight.

4. A ferrule (2) according to claim 1 wherein the ceramic material includes a stabilizer.

5. A method of making a ferrule (2) for an optical fiber (1) connector by shaping and sintering pulverized ceramic material comprising the steps of:
preparing a mixture of pulverized zirconia (ZrO₂) and a least 0.01 percent by weight of pulverized alumina (Al₂O₃), at least 0.01 percent by weight;
shaping the mixture into a predetermined form; and
sintering the so shaped mixture.

6. The method of making a ferrule (2) according to claim 5 wherein the amount of said pulverized alumina ranges from 0.2 to 0.3 percent by weight.

7. The method of making a ferrule (2) according to claim 5 wherein the amount of said pulverized alumina is 0.25 percent by weight.

8. The method of making a ferrule (2) according to claim 5 wherein the mixture includes a given amount of stabilizer.

9. A ferrule (2) for an optical fiber (1) connector made by shaping and sintering pulverized ceramic material, said ceramic material comprising pulverized zirconia (ZrO₂), a predetermined amount of stabilizer and at least 0.01 percent by weight of pulverized alumina (Al₂O₃) to prevent the radius of curvature of a physical contact surface of said ferrule from varying with time.

10. The ferrule (2) according to claim 9 wherein the amount of said pulverized alumina ranges from 0.2 to 0.3 percent by weight.

11. The ferrule (2) according to claim 9 wherein the amount of said pulverized alumina is 0.25 percent by weight.
